# EUROPÄISCHE PATENTANMELDUNG

(11) **EP 4 632 557 A1**
(43) Veröffentlichungstag der Anmeldung: **15.10.2025**
(21) Anmeldenummer: 24169997.4
(22) Anmeldetag: 12.04.2024
(51) Int. Cl.: G06F 8/33, G06F 11/28, G06F 11/36, H02J 3/00

(54) **VERFAHREN UND IED ZUM AUSFÜHREN EINES EXTERNEN ZUSATZPROGRAMMS IN EINER BESTEHENDEN LAUFZEITUMGEBUNG**

(71) Anmelder: Siemens Aktiengesellschaft, 80333 München (DE)
(72) Erfinder: Becker, Karsten, 15366 Neuenhagen (DE); Hurrelmann, Jonas, 13347 Berlin (DE); Kind, Roland, 14482 Potsdam (DE); Koplin, Kai, 14482 Potsdam (DE); Lerzer, Christoph, 90584 Allersberg (DE); Sommer, Dirk, 13053 Berlin (DE); Stollfuß, Marcus, 13467 Berlin (DE)
(74) Vertreter: Siemens Patent Attorneys

(57) **Zusammenfassung**

Die Erfindung betrifft ein Computerimplementiertes Verfahren zum Erzeugen eines externen Zusatzprogramms (12), welches eine Zusatzfunktion innerhalb einer bestehenden Laufzeitumgebung (8) bereitstellt, auf einer IED mit den Schritten:
- Schaffen einer virtuellen Maschinenumgebung (9) in der Laufzeitumgebung (8) mittels eines Prozessors der IED,
- Laden von externen Programmanweisungen (11) zum Erzeugen eines Zusatzprogramms (12) in die virtuelle Maschinenumgebung (9) und
- Ausführen der externen Programmanweisungen (12) durch die virtuelle Maschinenumgebung (9) unter Gewinnung der in der Laufzeitumgebung (8) wirksamen Zusatzfunktion. Um eine externe Zusatzfunktion ohne Unterbrechung des Laufzeitprogramms aufwandsarm erzeugen zu können, wird vorgeschalgen, dass das Zusatzprogramm (12) ein deterministisches Verhalten aufweist, wobei vor dem Wirksam werden der Zusatzfunktion die Laufzeitumgebung (8) in einem Verifikationsschritt das deterministische Verhalten des Zusatzprogramms (12) überprüft.

## Beschreibung

Die Erfindung betrifft ein Computerimplementiertes Verfahren zum Erzeugen eines externen Zusatzprogramms, das eine Zusatzfunktion innerhalb einer bestehenden Laufzeitumgebung bereitstellt, auf einer IED mit den Schritten: Schaffen einer virtuellen Maschinenumgebung in der Laufzeitumgebung mittels eines Prozessors der IED, Laden von externen Programmanweisungen zum Erzeugen eines Zusatzprogramms in der virtuellen Maschinenumgebung und Erzeugen des Zusatzprogramms durch die virtuelle Maschinenumgebung unter Gewinnung der in der Laufzeitumgebung wirksamen Zusatzfunktion.

Die Erfindung betrifft ferner ein Intelligentes Elektronisches Gerät, IED, für einen Einsatz im Bereich der Elektroenergieversorgung mit einem Messdateneingang zum Empfangen von Messdaten, einem Speicherbereich, auf dem Überwachungsalgorithmen abgelegt sind, und einer Logikeinheit zum Verarbeiten der Messdaten, wobei die Logikeinheit anhand der Messdaten und mit Hilfe der Überwachungsalgorithmen feststellt, ob eine Fehlerbedingung vorliegt, und bei Feststellung einer Fehlerbedingung eine Fehlersignal erzeugt, wobei auf dem IED eine Laufzeitumgebung erzeugbar ist, die zum Schaffen einer virtuellen Maschinenumgebung in der Laufzeitumgebung mittels eines Prozessors der IED eingerichtet ist, wobei die Laufzeitumgebung ferner zum Laden von externen Programmanweisungen, die ein Zusatzprogramm in der virtuellen Maschinenumgebung erzeugen, und zum Erzeugen des Zusatzprogramms durch die virtuelle Maschinenumgebung unter Gewinnung der in der Laufzeitumgebung (8) wirksamen Zusatzfunktion eingerichtet ist.

Ein solches Verfahren und ein solches IED sind dem Fachmann aus der Praxis bereits bekannt. So weisen beispielsweise markterhältliche Browser eine virtuelle Maschine oder mit anderen Worten Maschinenumgebung auf, die es ermöglichen externe Programme in dem Browser zu erzeugen und ablaufen zu lassen. Die betreffenden Programme sind in dem als WebAssembly - auch bekannt als Wasm - bezeichneten Binärformat codiert.

Die Anwendung einer virtuellen Maschinenumgebung findet auch im Zusammenhang mit der Ausführungsumgebung eBPF (extended Berkeley Packet Filter) statt, die speziell für den Betrieb von Bytecode im Linux-Kernel konzipiert ist.

Intelligente elektronisches Geräte (IED) für Elektroenergieversorgungsnetze sind markterhältlich und dem Fachmann ebenfalls bekannt. Sie sind beispielsweise für den Schutz des Elektroenergieversorgungsnetzes vor Kurzschlüssen verantwortlich. Solche IED können davon abweichend auch als Automatisierungsgeräte ausgestaltet sein, die die Funktion von Bauteilen des Elektroenergieversorgungsnetzes kontrollieren und/oder überwachen. Solche IEDs verfügen über einen Messdateneingang zum Empfangen von Messdaten. Eine Logikeinheit überprüft die eingehenden Messwerte oder Messdaten mithilfe der im Speicher abgelegten Algorithmen auf das Vorliegen von Fehlerbedingungen hin. Wird eine solche Fehlerbedingung festgestellt, wird ein Fehlersignal erzeugt, sodass zur Beseitigung des Fehlers notwendige Schritte eingeleitet werden können. Solche Schritte sind beispielsweise das Schalten eines Leistungsschalters in dem Elektroenergieversorgungsnetz der den fehlerhaften Leiterstrang von dem Rest des Elektroenergieversorgungsnetzes abtrennt.

Dem eingangs genannten Verfahren haftet der Nachteil an, dass es nicht zum Schutz von Elektroenergieversorgungsnetzen eingesetzt werden kann.

Die bislang von virtuellen Maschinen erzeugbaren Zusatzprogramme sind von nichtdeterministischer Natur und somit für einen Einsatz im Bereich der Automatisierungs- und Schutztechnik von Elektroenergieversorgungsnetzen ungeeignet.

Aufgabe der Erfindung ist es, ein Verfahren und ein IED der eingangs genannten Art bereit zu stellen, das eine externe Zusatzfunktion ohne Unterbrechung des Laufzeitprogramms aufwandsarm erzeugt.

Die Aufgabe wird ausgehend von dem oben genannten Verfahren im Rahmen der Erfindung dadurch gelöst, dass das Zusatzprogramm ein deterministisches Verhalten aufweist, wobei vor dem Wirksam werden der Zusatzfunktion die Laufzeitumgebung in einem Verifikationsschritt das deterministische Verhalten des Zusatzprogramms überprüft.

Die Aufgabe wird ausgehend von dem oben genannten IED erfindungsgemäß dadurch gelöst, dass auf dem IED eine Laufzeitumgebung erzeugt ist, die ein Verfahren gemäß einem der vorhergehenden Ansprüche bereitstellt.

Im Rahmen der Erfindung wird eine virtuelle Maschinenumgebung erstmals innerhalb eines Laufzeitprogramms bereitgestellt, das Verfahren zum Schutz oder zur Automatisierung im Bereich der Elektroenergieversorgung bereitstellt. Dazu muss das Zusatzprogramm ein deterministisches Verhalten aufweisen, das nach dem erfolgreichen Durchlaufen eines Verifikationsschrittes gewährleistet ist.

Unter einem deterministischen Zusatzprogramm ist im Rahmen der Erfindung ein Algorithmus oder ein Programm zu verstehen, bei dem nur definierte und reproduzierbare Zustände auftreten. Im Sinne der vorliegenden Erfindung wird unter einem deterministischen Zusatzprogramm ein solcher Algorithmus oder ein solches Programm verstanden, bei dem im Hinblick auf die Gewährleistung von Sicherheit und Stabilität des Gesamtsystems sämtliche Prozesse und Zustandsübergänge vorab festgelegt und reproduzierbar gestaltet sind. Insbesondere ist die Determiniertheit erfindungsgemäß dahingehend zu interpretieren, dass sie sich auf die terminale Eigenschaft des Programms bezieht, welche sicherstellt, dass jede Ausführung nach endlicher Zeit abgeschlossen wird, um unkontrollierte oder unendliche Berechnungsvorgänge auszuschließen und eine vorhersehbare Systemintegrität zu garantieren. Dieser Ansatz wird etwa bei eBPF angewandt, indem bestimmt Konstrukte wie Schleifen oder dergleichen durch einen Prüfschritt unterbunden werden. Bei einer gleichen Eingabe folgt auch immer die gleiche Ausgabe und zusätzlich wird es die gleiche Folge an Zwischenzuständen durchlaufen. Zu jedem Zeitpunkt - eine bestimmte Eingabe vorausgesetzt - sind die Abarbeitungsschritte des Algorithmus oder Programms eindeutig festgelegt. Damit sind alle Zwischenergebnisse innerhalb des Algorithmus immer gleich. Ein solches deterministisches Verhalten ist notwendig, um mit Hilfe der Maschinenumgebung eine zusätzliche externe Überwachungsfunktion in eine bestehende Laufzeitumgebung einzufügen. Auf diese Weise kann auf einfache Weise die Funktionsvielfalt des Laufzeitprogramms erweitert werden, ohne dass eine aufwändige hardwareabhängige Kompilierung des gesamten Laufzeitprogramms, bei dem die Zusatzfunktion auf der Basis des Quellcodes hinzugefügt wurde, vermieden werden.

Zur Sicherstellung des deterministischen Verhaltens dient im Rahmen der Erfindung ein Verifikationsschritt. Durch den Verifikationsschritt werden die Zustände, die bei verschiedenen Abläufen des Algorithmus durchlaufen werden, miteinander verglichen. Liegt immer Identität dieser Zustände vor, wurde der Verifikationsschritt erfolgreich durchgeführt, so dass das deterministische Verhalten der Zusatzfunktion als nachgewiesen gilt. Die Zusatzfunktion kann nun innerhalb der bestehenden Laufzeitumgebung Wirkung entfalten.

Eine Überwachungsfunktion im Rahmen der Erfindung ist beispielsweise eine Schutzfunktion, die zum Schutz eines Elektroenergieversorgungsnetzes vor Fehlern wie beispielsweise Kurzschlüssen im besagten Netz dient. Abweichend davon dient die Überwachungsfunktion zum Überwachen des Zustandes von Komponenten der Elektroenergieversorgungsnetzes. Die Überwachungsfunktion kann auch zur Steuerung von Komponenten des besagten Netzes dienen.

Vorteilhafterweise ist das IED ein Schutzgerät oder ein Automatisierungsgerät. Solche Geräte werden üblicherweise im Bereich der Elektroenergieversorgung eingesetzt. So werden beispielsweise mehrere Schutzgeräte in einem Umspannwerk benötigt, die verschiedene Abzweige oder Komponenten des Umspannwerks, beispielsweise einen Transformator, auf das Vorliegen von Fehlerbedingungen hin überwachen. So kann beispielsweise in einem Abzweig des Umspannwerks ein Kurzschluss vorliegen. Dieser Kurzschluss wird mithilfe eines Schutzalgorithmus erkannt, der üblicherweise herstellerseitig im Rahmen eines Laufzeitprogramms bereitgestellt wird.

Ein Automatisierungsgerät hingegen dient zur Überwachung des Zustandes von Geräten und deren Steuerung, wobei die Geräte beispielsweis in einem Umspannwerk eingesetzt werden. Vorteilhafterweise wird im Rahmen der Erfindung die Laufzeitumgebung auf einem Schutzgerät oder einem Automatisierungsgerät, das im Bereich der Elektroenergieversorgungsnetz eingesetzt wird, erzeugt. In diesem Bereich ist das oben erläuterte deterministische Verhalten zwingend erforderlich.

Gemäß einer weiteren zweckmäßigen Variante des erfindungsgemäßen Verfahrens ist das Schutzgerät ein zentrales Schutzgerät, das mehrere Abzweige und/oder Komponenten des Elektroenergieversorgungsnetzes auf das Vorliegen von Fehlerbedingungen hin überwacht. Mit anderen Worten stellt das Laufzeitprogramm alle Funktionen für ein zentrales Schutzgerät (CPC) bereit. Solche zentralen Schutzgeräte vereinen mehrere oder alle feldseitig vorgesehenen Schutzgeräte zu einem einzigen Schutzgerät und das lediglich mit feldseitig angeordneten Messstellen und/oder Merging Units verbunden ist. Das zentrale Schutzgerät überwacht beispielsweise gleichzeitig alle oder jedenfalls mehrere Komponenten und/oder Abzweige eines Umspannwerkes auf das Vorliegen von Fehlerbedingungen wie beispielsweise Kurzschlüsse mit Hilfe von Distanzschutz, Differentialschutz oder dergleichen.

Um ein Verfahren in Gestalt von eines zentralen Laufzeitprogramms zum Schutz von Umspannwerken unabhängig von der Hardware anzubieten, wird der Quellcode solches zentrales Laufzeit- oder Schutzprogramm so kompiliert, das es auf der anwenderseitig vorliegenden Hardware zum Laufen gebracht werden kann. Die Hardware kann von Anwender zu Anwender unterschiedlich sein. Läuft das erfindungsgemäße Verfahren auf der besagten Hardware ab, ist durch das Vorsehen einer virtuellen Maschinenumgebung die Aufnahme zusätzlicher Schutzfunktionen vollständig von der Frage welche Hardware anwenderseitig vorliegt entkoppelt.

Vorteilhafterweise ist die Zusatzfunktion eine Schutzfunktion, die ein Elektroenergieversorgungsnetz auf das Vorliegen von Fehlerbedingungen hin überwacht.

Gemäß einer bevorzugten Variante des erfindungsgemäßen Verfahrens werden die externen Programmanweisungen unter Gewinnung eines Quellcodes in einer beliebigen Programmiersprache programmiert. Anschließend wird der Quellcode unter Gewinnung eines Byte-Codes kompiliert, wobei der Byte-Code in die virtuelle Maschinenumgebung geladen wird. Gemäß dieser vorteilhaften Weiterentwicklung der Erfindung ist beispielsweise auch ein Anwender des erfindungsgemäßen Verfahrens, dessen Schritte durch ein Laufzeitprogramm bereitgestellt werden, in der Lage, mithilfe eines beliebigen Quellcodes eine solche Zusatzfunktion in dem Laufzeitprogramm zu erzeugen.

Dabei ist der korrespondierende Byte-Code, der von der virtuellen Maschine interpretiert wird, konzipiert, um plattformunabhängig zu sein, wodurch er die Fähigkeit erhält, in diversen Ausführungskontexten Anwendung zu finden. Dies ermöglicht eine universelle Einsatzbarkeit der Zusatzfunktion ohne Anpassung an spezifische Zielplattformen, was eine erhebliche Flexibilität und Erweiterbarkeit der erfindungsgemäßen Technologie in unterschiedlichen Systemumgebungen und unter variierenden technischen Voraussetzungen gewährleistet.

Weitere Vorteile und Varianten der Erfindung sind Gegenstand der nachfolgenden Beschreibung von Ausführungsbeispielen unter Bezugnahme auf die Figuren der Zeichnungen, wobei gleiche Bezugszeichen auf gleichwirkende Bauteile verweisen und wobei
Figur 1 ein Ausführungsbeispiel des erfindungsgemäßen IEDs und des erfindungsgemäßen Verfahrens und
Figur 2 einen Kompilierschritt im Rahmen der Erfindung schematisch verdeutlichen.

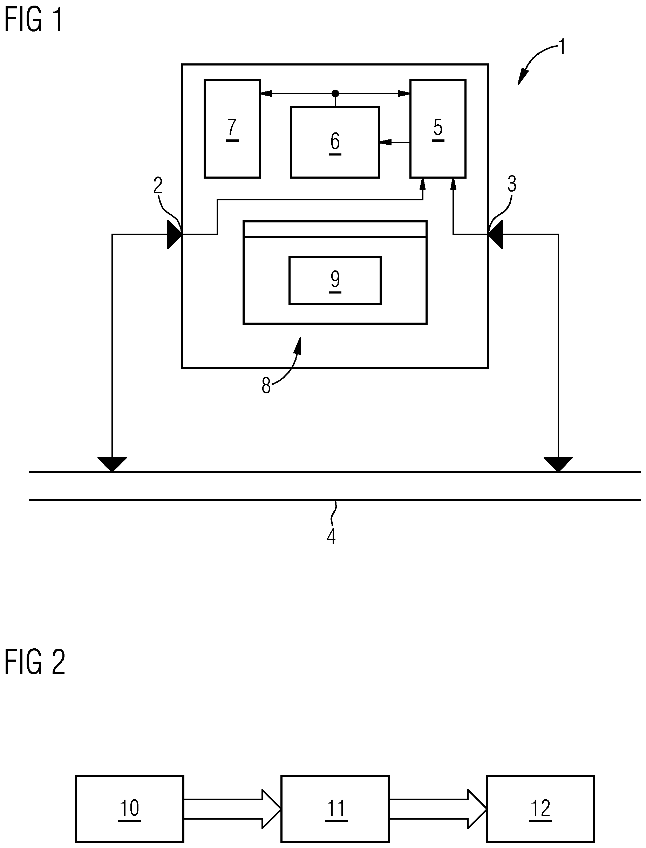

Figur 1 verdeutlicht ein Ausführungsbeispiel des erfindungsgemäßen Verfahrens und des erfindungsgemäßen IEDs 1 schematisch. Das IED 1, das als zentrales Schutzgerät ausgestaltet ist, verfügt über zwei Dateneingänge 2 und 3, über die es mit einem Prozessbus 4 verbunden ist. Abweichend davon ist das Schutzgerät ein feldseitiges also dezentrales Schutzgerät. Der Prozessbus liefert die von figürlich nicht dargestellten Messsensoren bereitgestellten Messwerte, die von einer oder mehreren ebenfalls figürlich nicht dargestellten Merging Units vorverarbeitet und digitalisiert wurden, in Gestalt von digitalen Zeigergrößen.

Eine Merging Unit wird in der Regel verwendet, um analog erfasste Messwerte in digitale Zeigergrößen umzuwandeln. Eine Merging Unit trennt so die analoge von der digitalen Welt. Analoge Messwerte eines Messsensors werden mithilfe der Merging Unit vorverarbeitet. So wird das analoge Signal mit einer Abtastrate unter Gewinnung von Abtastwerten abgetastet, die anschließend digitalisiert in digitale Zeigermesswerte umgewandelt werden. Eine Zeigermesswert umfasst neben der Amplitude eines in einer Leiterphase einer dreiphasigen Leitung des Elektroenergieversorgungsnetzes gemessenen Stromes auch dessen Phasenlage bezüglich der in den anderen Leiterphasen gemessenen Ströme.

Von den Messwerteeingängen 2 oder 3 aus gelangen die digitalen Zeigermessewerte zu einer Speichereinheit 5 des IEDs 1, auf der diese über eine bestimmte Zeitdauer hinweg gespeichert werden.

Die Messwerte in Gestalt digitaler Zeigergrößen werden einer Logikeinheit 6 zu Verfügung gestellt. Dies kann im Rahmen der Erfindung auf unterschiedliche Wiese erfolgten. Die Logikeinheit 6 kann auf die Speichereinheit zugreifen und auf diese Weise die Messwerte erhalten. Abweichend hiervon ist es im Rahmen der Erfindung möglich, dass die Messwerte direkt von Dateneingängen 2 und/oder 3 zur Logikeinheit gelangen. In dem dargestellten Ausführungsbeispiel werden die Messwerte von der Speichereinheit an die Logikeinheit auf Anfrage von der Logikeinheit gesendet.

Nach Erhalten der Messwerte werden die Messwerte von der Logikeinheit auf das Vorliegen von Fehlerbedingungen hin überprüft. Hierfür nutzt die Logikeinheit Schutzalgorithmen 7, die ihr zur Verfügung gestellt werden. Die Anzahl der beispielweise auf der Speichereinheit 5 als Schutzprogramme gespeicherten Schutzalgorithmen 7 ist begrenzt.

Bei den Schutzalgorithmen 7 handelt es sich um einen Distanzschutz, einem Differentialschutz oder dergleichen. Die Schutzalgorithmen sind dem Fachmann als solche bekannt.

Wird auf einem solchen Schutz- oder Automatisierungsgerät ein Laufzeitprogramm gemäß dem Stand der Technik in Gang gesetzt wurde, können externe Zusatzprogramme nur aufwändig der bestehenden Laufzeitumgebung hinzugefügt werden. Hierzu muss das Laufzeitprogramm zunächst unterbrochen werden. Anschließend muss der Zusatzquellcode des Zusatzprogramms in den Quellcode des bisherigen Laufzeitprogramms integriert werden. Der so erweiterte Quellcode wird und schließlich wieder unter Gewinnung eines neuen Laufzeitprogramms kompiliert. Dabei ist das Kompilieren von der Hardware des Nutzers abhängig. Eine längere Unterbrechung des Laufzeitprogramms zur Aufnahme von neuen Schutzfunktionen ist jedoch unerwünscht. Insbesondere bei komplexen Laufzeitprogrammen ist das erneute Kompilieren des erweiterten Laufzeitprogramms in Abhängigkeit der Hardware eines Anwenders des Laufzeitprogramms misslich.

Des Weiteren ist es im Rahmen des dargelegten Verfahrens möglich, dass Funktionserweiterungen unabhängig vom ursprünglichen Hersteller vorgenommen werden können, ohne dass hierfür neue Versionen des Laufzeitprogramms auf dem entsprechenden Gerät installiert werden müssen. Dieses Vorgehen ist insbesondere für Anlagen von Bedeutung, die bereits einer Zertifizierung unterzogen wurden, da es die Aufrechterhaltung der Zertifizierungsstandards erlaubt, während es zugleich die Flexibilität bietet, neue Funktionen hinzuzufügen, ohne die Notwendigkeit einer neuerlichen Zertifizierung.

Grundsätzlich ist es im Rahmen der Erfindung auch möglich, dass das erfindungsgemäße Verfahren auf einer klassischen Intelligenten elektronischen Einheit (IED) beispielsweise einem markterhältlichen Schutzgerät abläuft. Die virtuelle Maschinenumgebung 9 steht in gleicher weise wie der Schutz 7 in Verbindung mit der Speichereinheit oder der Logikeinheit (bzw. Ist in der Lage Messwerte zu empfangen und zu verarbeiten)

Auf dem der Zeichnung gezeigten zentralen Schutzgerät 1 läuft ein erfindungsgemäßes Laufzeitprogramm 8 ab, das die erfindungsgemäßen Verfahrensschritte bereitstellt. Das Laufzeitprogramm 8 wurde einem Anwender des erfindungsgemäßen Verfahrens von einem Entwickler des Laufzeitprogramms zur Verfügung gestellt. Die Hardware liegt anwenderseitig vor. Mit Hilfe des Laufzeitprogramms 8 ist eine Laufzeitumgebung erzeugt, die gemäß dem gezeigten Ausführungsbeispiel für einen fortwährenden Schutz eines Elektroenergieversorgungsnetzes vor Fehlern beispielsweise Kurschlüssen in einer seiner Komponenten oder eines seiner Abzweige sorgt. Dies kann beispielsweise in einem Umspannwerk erfolgen.

In Figur 1 ist ferner schematisch dargestellt, dass durch das Laufzeitprogramm 8 eine Maschinenumgebung 9 erzeugt ist. Die virtuelle Maschinenumgebung 9 steht in gleicher Weise wie der Schutz 7 in Verbindung mit der Speichereinheit oder der Logikeinheit, ist also mit anderen Worten in der Lage Messwerte zu empfangen und zu verarbeiten. In der Maschinenumgebung 9, also mit anderen Worten einer virtuellen Maschine, ist ein Byte-Code geladen, der von der virtuellen Maschine unter Gewinnung eines Zusatzprogramms kompiliert wird. Das Zusatzprogramm stellt eine Zusatzfunktion bereit. Diese Zusatzfunktion ist beispielsweise eine weitere Schutzfunktion die zusätzlich zu den bereits vorhandenen Schutzfunktionen erzeugt wird. Da der Byte-Code für die virtuelle Maschine kompiliert wird, kann die Zusatzfunktion unabhängig von den hardwareseitig vorliegenden Bedingungen geschaffen werden. Es werden weitere Zusatzfunktionen der Laufzeitumgebung bereitgestellt. Bevor die Zusatzfunktion bereitgestellt werden, kann muss das Zusatzprogramm 8 jedoch einen Test in Gestalt eines Verifikationsschrittes durchlaufen. Dieser Verifikationsschritt wird durch das Laufzeitprogramm 8 erzeugt. In dem besagten Verifikationsschritt wird überprüft, ob das Zusatzprogramm ein deterministisches Verhalten aufweist. In diesem Zusammenhang wird auf die obenstehenden Ausführungen verwiesen.

Figur 2 zeigt ein in Gestalt eines Ablaufdiagramms wie die Zusatzfunktion ausgehend von einem in einer beliebigen Programmiersprache programmierten Quellcode 10 erzeugt werden kann. Zunächst wird der Quellcode in einen Byte-code 11 umgewandelt. Dies erfolgt mittels eines Compilers. Der so erzeugte Byte-Code 11 wird in die virtuelle Maschine 9 des Laufzeitprogramms 8 geladen. Die virtuelle Maschine 9 ist derart ausgestaltet, dass sie den Byte-Code gemäß vorgegebenen Parametern ausführt. Dabei umfasst die virtuelle Maschine eine Schnittstelle, die es ermöglicht, auf Eingangsdaten zuzugreifen. Zusätzlich ist die virtuelle Maschine dazu befähigt, auf Basis der Ausführung des Byte-Codes Ausgangsdaten oder Ausgangssignale zu erzeugen, welche für die weitere Verarbeitung oder zur Steuerung externer Prozesse eingesetzt werden können. Die Schnittstelle ermöglicht somit eine Interaktion der virtuellen Maschine mit ihrer Umgebung, indem sie eine bidirektionale Datenübertragung unterstützt, wodurch die virtuelle Maschine eine flexible Anwendbarkeit in verschiedenen technischen Kontexten aufweist.

## Patentansprüche

1. Computerimplementiertes Verfahren zum Erzeugen eines externen Zusatzprogramms (12), welches eine Zusatzfunktion innerhalb einer bestehenden Laufzeitumgebung (8) bereitstellt, auf einer IED mit den Schritten:
- Schaffen einer virtuellen Maschinenumgebung (9) in der Laufzeitumgebung (8) mittels eines Prozessors der IED,
- Laden von externen Programmanweisungen (11) zum Erzeugen eines Zusatzprogramms (12) in die virtuelle Maschinenumgebung (9) und
- Ausführen der externen Programmanweisungen (12) durch die virtuelle Maschinenumgebung (9) unter Gewinnung der in der Laufzeitumgebung (8) wirksamen Zusatzfunktion,
**dadurch gekennzeichnet, dass**
vor dem Wirksam werden der Zusatzfunktion die Laufzeitumgebung (8) in einem Verifikationsschritt das deterministische Verhalten des Zusatzprogramms (12) überprüft.

2. Computerimplementiertes Verfahren nach Anspruch 1,
**dadurch gekennzeichnet, dass**
die Laufzeitumgebung (8) auf einem Schutzgerät (1) oder einem Automatisierungsgerät für ein Elektroenergieversorgungsnetz erzeugt wird.

3. Computerimplementiertes Verfahren nach Anspruch 2,
**dadurch gekennzeichnet, dass**
das Schutzgerät ein zentrales Schutzgerät (1) ist, das mehrere Abzweige und/oder Komponenten des Elektroenergieversorgungsnetzes auf das Vorliegen von Fehlerbedingungen hin überwacht.

4. Computerimplementiertes Verfahren nach Anspruch 2 oder 3,
**dadurch gekennzeichnet, dass**
die Zusatzfunktion eine Schutzfunktion ist, die das Elektroenergieversorgungsnetz auf das Vorliegen von Fehlerbedingungen hin überwacht.

5. Computerimplementiertes Verfahren nach einem der vorhergehenden Ansprüche,
**dadurch gekennzeichnet, dass**
ein Quellcode für das Zusatzprogramm in einer beliebigen Programmiersprache programmiert wird, der Quellcode anschließend unter Gewinnung eines Byte-Codes kompiliert wird und der Byte-Code in die virtuelle Maschine geladen wird, die das Zusatzprogramm (12) erzeugt.

6. Intelligentes Elektronisches Gerät, IED, (1) für einen Einsatz im Bereich der Elektroenergieversorgung mit
- einem Messdateneingang (2, 3) zum Empfangen von Messdaten,
- einem Speicherbereich (5), auf dem Überwachungsalgorithmen abgelegt sind, und
- einer Logikeinheit (6) zum Verarbeiten der Messdaten, wobei die Logikeinheit anhand der Messdaten und mit Hilfe der Überwachungsalgorithmen (7) feststellt, ob eine Fehlerbedingung vorliegt, und bei Feststellung einer Fehlerbedingung eine Fehlersignal erzeugt,
wobei auf dem IED eine Laufzeitumgebung (8) erzeugbar ist, die zum Schaffen einer virtuellen Maschinenumgebung (9) in der Laufzeitumgebung (8) mittels eines Prozessors der IED eingerichtet ist, wobei die Laufzeitumgebung ferner zum Laden von externen Programmanweisungen (11), die ein Zusatzprogramm (12) in der virtuellen Maschinenumgebung (9) erzeugen, und zum Erzeugen des Zusatzprogramms (12) durch die virtuelle Maschinenumgebung (9) unter Gewinnung der in der Laufzeitumgebung (8) wirksamen Zusatzfunktion eingerichtet ist,
**dadurch gekennzeichnet, dass**
das Zusatzprogramm (12) ein deterministisches Verhalten aufweist, wobei vor dem Wirksam werden der Zusatzfunktion die Laufzeitumgebung (8) in einem Verifikationsschritt das deterministische Verhalten des Zusatzprogramms (12) überprüft.

7. Um ein Verfahren Verfahren zum Erzeugen eines externen Zusatzprogramms (12) zum Bereitstellen einer Zusatzfunktion innerhalb einer bestehenden Laufzeitumgebung (8) mit den Schritten:
- Schaffen einer virtuellen Maschinenumgebung (9) in der Laufzeitumgebung (8),
- Laden von externen Programmanweisungen (11) zum Erzeugen eines Zusatzprogramms (12) in der virtuelle Maschinenumgebung (9) und
- Erzeugen des Zusatzprogramms (12) durch die virtuelle Maschinenumgebung (9) unter Gewinnung der in der Laufzeitumgebung (8) wirksamen Zusatzfunktion , bereitzustellen, das eine externe Zusatzfunktion ohne Unterbrechung des Laufzeitprogramms aufwandsarm erzeugt, wird vorgeschlagen, dass das Zusatzprogramm (12) ein deterministisches Verhalten aufweist, wobei vor dem Wirksam werden der Zusatzfunktion die Laufzeitumgebung (8) in einem Verifikationsschritt das deterministische Verhalten des Zusatzprogramms (12) überprüft.
